# EUROPÄISCHE PATENTSCHRIFT

(11) **EP 0 876 413 B1**
(45) Veröffentlichungstag und Bekanntmachung des Hinweises auf die Patenterteilung: **12.04.2000**
(21) Anmeldenummer: 97901580.7
(22) Anmeldetag: 22.01.1997
(51) Int. Cl.: C08F 291/00

(54) **ALS DISPERGIERHARZE GEEIGNETE POLYMERISATE**
POLYMERS SUITABLE AS DISPERSING RESINS
POLYMERISATS POUVANT ETRE UTILISES COMME RESINES DE DISPERSION

(30) Priorität: 25.01.1996 DE 19602544
(43) Veröffentlichungstag der Anmeldung: 11.11.1998
(73) Patentinhaber: BASF AKTIENGESELLSCHAFT, 67056 Ludwigshafen (DE)
(72) Erfinder: WEINGART, Franz, D-69181 Leimen (DE); PAULUS, Wolfgang, D-55128 Mainz (DE); BAUER, Stephan, D-67126 Hochdorf-Assenheim (DE)
(86) Internationale Anmeldenummer: EP9700283
(87) Internationale Veröffentlichungsnummer: WO9727232

(56) Entgegenhaltungen:
- WO-A-96/00251
- US-A- 3 506 574
- US-A- 5 412 047

## Beschreibung

Die vorliegende Erfindung betrifft als Dispergierharze geeignete Polymerisate I, erhältlich durch Umsetzung von
A. einem Polymerisat II, erhältlich durch Umsetzung von mindestens einer Verbindung III aus der Gruppe bestehend aus
   a) einem Ester IV aus
      a1) einer α,β-ungesättigten Carbonsäure V und
      a2) einem Alkylalkohol VI mit 1 bis 25 Kohlenstoffatomen,
   b) einem Ester VII aus
      b1) Vinylalkohol und
      b2) einer gesättigten Carbonsäure VIII mit 1 bis 4 Kohlenstoffatomen,
   c) Vinylchlorid,
   d) Styrol oder Vinylbenzole, die am Benzolring eine Alkylgruppe mit 1 bis 4 Kohlenstoffatomen tragen, in Gegenwart einer Verbindung IX, die eine N-Oxyl-Radikal-Funktion enthält, mit
B. mindestens einer Verbindung X aus
   a) 50 bis 100 Gew.-% bezogen auf X mindestens einer Verbindung XI aus der Gruppe bestehend aus
      a1) einem Ester XII aus
   a) einer α,β-ungesättigten Carbonsäure XIII und
   b) einem Alkylalkohol XIV mit 2 bis 10 Kohlenstoffatomen, der mindestens eine polare oder saure Gruppe trägt,
      a2) einem Amid XV aus
   a) einer α,β-ungesättigten Carbonsäure XVI und
   b) Ammoniak oder einem Amin XVII mit 2 bis 10 Kohlenstoffatomen, das mindestens eine polare, oder saure Gruppe oder eine Gruppe, die leicht in eine saure Gruppe übergehen kann, trägt,
      a3) N-Vinyl-Verbindungen XVIII,
      a4) Styrolsulfonsäure oder einer Vinylbenzolsulfonsäure, die eine Alkylgruppe mit 1 bis 4 Kohlenstoffatomen am Ring trägt, und
   b) 0 bis 50 Gew.-% bezogen auf X mindestens einer Verbindung XIX aus der Gruppe bestehend aus b1) einem Ester XX aus
   a) einer α,β-ungesättigten Carbonsäure XXI und
   b) einem Alkylalkohol XXII mit 1 bis 25 Kohlenstoffatomen,
      b2) einem Ester XXIII aus
   a) Vinylalkohol und
   b) einer gesättigten Carbonsäure XXIV mit 1 bis 4 Kohlenstoffatomen,
      b3) Vinylchlorid,
      b4) Styrol oder Vinylbenzole, die am Benzolring eine Alkylgruppe mit 1 bis 4 Kohlenstoffatomen tragen, in Gegenwart einer Verbindung XXV, die eine N-Oxyl-Radikal-Funktion enthält,
wobei der Gewichtsanteil von II an dem Polymerisat I 10 bis 90 Gew.-% und der Gewichtsanteil der Gesamtmenge von X 10 bis 90 Gew.-% an dem Polymerisat I beträgt.

Ferner betrifft sie die Verwendung solcher Polymerisate für Pigmentzubereitungen und pigmenthaltige Beschichtungen, sowie Pigmentzubereitungen aus einem Pigment und einem Polymerisat I.

Wäßrige und organische Suspensionen, die ein Pigment und ein Bindemittel enthalten, finden vielfache Anwendung zur Herstellung von Lacken (Ullmann's Encyclopedia of Industrial Chemistry, 5. Ed., Vol. 20, S. 243-369, VCH Publishers Inc., Weinheim-New York, 1992).

In derartigen Suspensionen soll das Pigment in der Regel sehr feinteilig sein und bleiben, ferner soll es sich schnell dispergieren lassen, und außerdem sollen die Suspensionen stabil bleiben. Da sich diese Forderungen mit reinen Pigmenten in aller Regel nicht erfüllen lassen, ist es zweckmäßig, die reinen Pigmente zunächst in eine entsprechende geeignete Gebrauchsform zu überführen, wobei es sich meistens um Pigmentzubereitungen mit einem sogenannten Dispergierharz handelt.

Als Dispergierharze kommen grundsätzlich Polymere mit polaren, sauren oder basischen Gruppen in Betracht. Insbesondere anorganische Pigmente lagern sich an diese sogenannten Ankergruppen an, so daß die organophilen Teile der Harz-Moleküle nach außen ragen und die Pigmentteilchen auf diese Weise mit dem Bindemittel, in welches sie eingebettet sind, verträglich machen.

Diese Dispergierharze können zwar helfen, Pigmentdispersionen zu stabilieren, jedoch ist die Dispersionsstabilität nicht ausreichend für die besonders vorteilhaften feinteiligen Pigmente.

In der US-A 5 412 047 wurden Polymerisate, die saure oder polare Gruppen enthalten können, beschrieben, die durch Umsetzung von verschiedensten olefinisch ungesättigten Verbindungen in beliebiger Reihenfolge und beliebiger Abmischung in Gegenwart einer Verbindung, die eine N-Oxyl-Radikal-Funktion enthält, hergestellt werden können.

Derartige Polymerisate weisen aber den Nachteil auf, daß sie weder zu den üblicherweise hydrophilen Pigmenten, noch zu den im allgemeinen organophilen Bindemitteln eine ausgeprägte Affinität aufweisen. Somit bleibt sowohl die Dispergierwirkung, wie auch die Verankerung der Pigmente in der Bindemittelmatrix unbefriedigend mit der Folge einer ungenügenden mechanischen Festigkeit, insbesondere Abriebfestigkeit, und Witterungsbeständigkeit, insbesondere Feuchtigkeitsbeständigkeit, der pigmenthaltigen Beschichtungen.

Der Erfindung lagen Dispergierharze als Aufgabe zugrunde, mit denen sich die beschriebenen Nachteile auf technisch einfache und wirtschaftliche Weise lösen lassen.

Demgemäß wurden die eingangs definierten Polymerisate I, ihre Verwendung für Pigmentzubereitungen und pigmenthaltige Beschichtungen, sowie Pigmentzubereitungen aus einem Pigment und einem Polymerisat I gefunden.

Als Ester IV kommen in erster Linie Ester von α,β-ungesättigten Carbonsäuren V der Formel 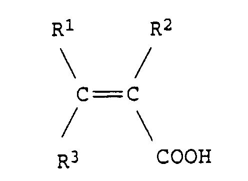 in Betracht, in der R¹, R² und R³ Wasserstoff oder C₁-C₄-Alkylreste darstellen, wobei Acrylsäure und Methacrylsäure bevorzugt sind. Es können auch Gemische von Estern verschiedener solcher Carbonsäuren eingesetzt werden.

Als Alkoholkomponente VI eignen sich neben den C₉ bis c₂₅-Alkoholen wie 2-Ethylhexanol, Nonanol, Stearylalkohol und Laurylalkohol, bevorzugt die C₁ bis C₈-Alkohole, insbesondere Methanol, Ethanol, n-Propanol, i-Propanol, n-Butanol, sek.-Butanol, tert.-Butanol, i-Butanol, tert.-Butan-1-ol sowie Gemische solcher Alkohole.

Als Ester VII kommen Ester von Vinylalkohol und einer gesättigten Carbonsäure mit 1 bis 4 Kohlenstoffatomen wie Ameisensäure, Buttersäure und Isopropylcarbonsäure, insbesondere Essigsäure und Propionsäure. Es können auch Gemische von Estern verschiedener solcher Carbonsäuren eingesetzt werden.

Ebenso eignen sich als Verbindung III Vinylchlorid, Styrol, Vinylbenzole, die am Benzolring eine Alkylgruppe mit 1 bis 4 Kohlenstoffatomen tragen, wie 4-Ethylstyrol. Die Polymerisate II können aus einer Verbindung III oder mehreren Verbindungen III aufgebaut sein.

Als Verbindung IX, die eine N-Oxyl-Radikal-Funktion enthält, kommen 2,2,6,6-Tetramethyl-1-piperidinyloxy (TEMPO), 4-Oxo-2,2,6,6-Tetramethyl-1-piperidinyloxy (4-Oxo-TEMPO), 2,6-Diphenyl-2,6-dimethyl-1-piperidinyloxy, 4-Hydroxy-2,2,6,6-tetramethyl-1-piperidinyloxy, 2,2,5,5-Tetramethyl-1-pyrrolidinyloxy, 2,5-Diphenyl-2,5-dimethyl-1-pyrrolidinyloxy, 3-Carboxy-2,2,5,5-tetramethyl-1-pyrrolidinyloxy und Ditert.-butylnitroxid, sowie Verbindungen IX wie beispielsweise in US-A 5 412 047 beschrieben, in Betracht. Es können auch Gemische verschiedener solcher Verbindungen eingesetzt werden.

Man kann die Polymerisate II nach allen bekannten Polymerisationsmethoden herstellen, also z.B. durch Substanzpolymerisation, Dispersionspolymerisation sowie vorzugsweise durch Lösungspolymerisation.

Als Lösungsmittel eignen sich Alkohole, wie Isopropanol, Glycole, wie Ethandiol, Polyethylenglycol, Polypropylenglycol, Glycerin und Dipropylenglycol, Ether wie Tetrahydrofuran (THF), Dioxan und Glycolether, N-Alkyl-pyrrolidinone, N-Alkyl-pyrrolidone, Amide, wie Dimethylacetamid, Dimethylformamid, Organosulfide, Sulfoxide, Sulfone, Ketone, wie Aceton und Methylethylketon, aliphatische und aromatische Kohlenwasserstoffe wie Hexan und Toluol, Wasser sowie Gemische solcher Lösungsmittel.

Die Polymerisation wird in der Regel bei erhöhter Temperatur, vorteilhaft bei 100 bis 180°C, vorzugswiese 110 bis 175°C, insbesondere 130 bis 160°C durchgeführt.

Die Verbindung III kann dabei in einer Charge oder in mehreren Chargen in die Reaktionsmischung eingebracht werden, wobei im Falle von mehreren Chargen die Chargen die gleiche oder unterschiedliche Zusammensetzungen aufweisen können.

Zum Starten der Reaktion kann man zweckmäßigerweise einen radikalischen Initiator zugeben. Als Initiator kommen 2,4-Dimethyl-2,5-dibenzyl-peroxyhexan, tert.-Butyl-peroxybenzoat, Di-tert.-butyl-diperoxyphthalat, Methylethylketonperoxid, Dicumylperoxid, tert.-Butyl-peroxycrotonat, 2,2-Bis-tert.-butyl(peroxybutan), tert.-Butylperoxy-isopropylcarbonat, 2,5-Dimethyl-2,5-bis(benzoylperoxy)hexan, ter.-Butylperacetat, 2,4-Pentadionperoxid, Di-tert.-butylperoxid, 2,5-Dimethyl-2,5-di(tert.-butylperoxy)hexan, vorzugsweise tert.-Butylperoxy-2-ethylhexanoat, tert.-Butylperoxypivalat, tert.-Amyl-peroxy-2-ethylhexanoat, insbesondere Azobisalkylnitrile wie Azobisisobutyronitril und Diaroylperoxide wie Dibenzoylperoxid sowie Mischungen solcher Verbindungen in Betracht.

Besonders geeignet sind Initiatoren mit einer Halbwertszeit von 1 Stunde bei 60 bis 90°C und einer Halbwertszeit von 10 Stunden bei 50 bis 80°C. Bei Verwendung von Initiatoren mit längerer Halbwertszeit können vorteilhaft Promotoren wie tertiäre Amine eingesetzt werden.

Das molare Verhältnis zwischen der Verbindung IX und dem Initiator sollte 0,5 bis 5, vorzugsweise 0,8 bis 4 betragen.

Die Polymerisate II können aus dem Reaktionsgemisch nach bekannten Methoden, z.B. durch Fällen oder Extraktion, isoliert oder ohne Isolierung zur Weiterverarbeitung eingesetzt werden.

Die Polymerisate II sollten vorteilhaft eine Molekulargewicht (Gewichtsmittel) von über 1000, vorzugsweise 3000 bis 30000, und einen Quotienten aus Molekulargewicht (Gewichtsmittel) zu Molekulargewicht (Zahlenmittel) von kleiner 3, vorzugsweise kleiner 2 aufweisen.

Als Ester XII kommen in erster Linie Ester von α,β-ungesättigten Carbonsäuren XIII der Formel 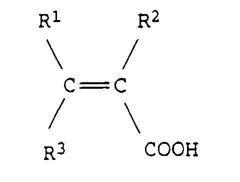 in Betracht, in der R¹, R² und R³ Wasserstoff oder C₁-C₄-Alkylreste darstellen, wobei Acrylsäure und Methacrylsäure bevorzugt sind. Es können auch Gemische von Estern verschiedener solcher Carbonsäuren eingesetzt werden.

Als Alkoholkomponente XIV eignen sich Diole wie 1,2-Ethandiol, 1,3-Propandiol, 1,4-Butandiol, polar substituierte Alkohole wie N,N-Dimethylaminoethanol und Ethylenglycolmonoethylether, Alkohole, die saure Gruppen tragen, wie 2-Sulfoethanol (Isethionsäure) und 3-Sulfopropanol sowie Gemische solcher Alkohole.

Als Amide XV kommen in erster Linie Amide von α,β-ungesättigten Carbonsäuren XVI der Formel 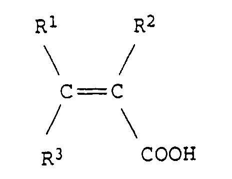 in Betracht, in der R¹, R² und R³ Wasserstoff oder C₁-C₄-Alkylreste darstellen, wobei Acrylsäure und Methacrylsäure bevorzugt sind. Es können auch Gemische von Amiden verschiedener solcher Carbonsäuren eingesetzt werden.

Als Aminkomponente eignen sich Ammoniak und Amine XVII, die mindestens eine polare Gruppe, eine saure Gruppe oder eine Gruppe, die leicht in eine saure Gruppe übergehen kann wie Salze, tragen, wie 2-Methyl-2-aminopropansulfonsäure, 2-Aminoethansulfonsäure, 3-Aminopropansulfonsäure sowie deren Salze, bevorzugt Metallsalze sowie Gemische solcher Aminkomponenten.

Als polare Gruppen kommen in erster Linie OH-Gruppen, tertiäre Aminogruppen, Sulfongruppen und als saure Gruppen besonders die Sulfonsäure-, Phosphonsäure-, Phosphorsäure- sowie vor allem Carboxylgruppe in Betracht.

Gruppen, die leicht in saure Gruppen übergehen, sind beispielsweise die Estergruppe oder Salze, vorzugsweise der Alkalimetalle wie Natrium oder Kalium.

Ebenso eignen sich als Verbindung XI N-Vinyl-Verbindungen XVIII, wie N-Vinylformamid, N-Vinylpyrrolidon, N-Vinylcaprolactam, N-Vinylimidazol, Vinylbenzolsulfonsäuren und Vinylbenzolsulfonsäuren, die am Benzolring eine Alkylgruppe insbesondere mit 1 bis 4 Kohlenstoffatomen tragen sowie Mischungen solcher Verbindungen. Die Polymerisate I können eine Verbindung XI oder mehreren Verbindungen XI enthalten.

Als Ester XX kommen in erster Linie Ester von α,β-ungesättigten Carbonsäuren XXI der Formel 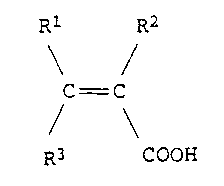 in Betracht, in der R¹, R² und R³ Wasserstoff oder C₁-C₄-Alkylreste darstellen, wobei Acrylsäure und Methacrylsäure bevorzugt sind. Es können auch Gemische von Estern verschiedener solcher Carbonsäuren eingesetzt werden.

Als Alkoholkomponente XXII eignen sich neben den C₉ bis C₂₅-Alkoholen wie 2-Ethylhexanol, Nonanol, Stearylalkohol und Laurylalkohol, bevorzugt die C₁ bis C₈-Alkohole, insbesondere Methanol, Ethanol, n-Propanol, i-Propanol, n-Butanol, sek.-Butanol, tert.-Butanol, i-Butanol, tert.-Butan-1-ol sowie Gemische solcher Alkohole.

Als Ester XXIII kommen Ester von Vinylalkohol und einer gesättigten Carbonsäure mit 1 bis 4 Kohlenstoffatomen wie Ameisensäure, Buttersäure und Isopropylcarbonsäure, insbesondere Essigsäure und Propionsäure. Es können auch Gemische von Estern verschiedener solcher Carbonsäuren eingesetzt werden.

Ebenso eignen sich als Verbindung XIX Vinylchlorid, Styrol, Vinylbenzole, die am Benzolring eine Alkylgruppe mit 1 bis 4 Kohlenstoffatomen tragen, wie 4-Ethylstyrol sowie Gemische solcher Verbindungen.

Der Gewichtsanteil der Verbindung X bezogen auf die Polymerisate I sollte 10 bis 90 Gew-% und der Gewichtsanteil der Polymerisate II bezogen auf die Polymerisate I 10 bis 90 Gew.-% betragen, wobei der Gewichtsanteil der Verbindung XI bezogen auf die Verbindung X 50 bis 100 Gew.-% und der Gewichtsanteil der Verbindung XIX an der Verbindung X 0 bis 50 Gew.-% betragen sollte.

Als Verbindung XXV, die eine N-Oxyl-Radikal-Funktion enthält, kommen 2,2,6,6-Tetramethyl-1-piperidinyloxy (TEMPO), 4-Oxo-2,2,6,6-Tetramethyl-1-piperidinyloxy (4-Oxo-TEMPO), 2,6-Diphenyl-2,6-dimethyl-1-pipeidinyloxy, 4-Hydroxy-2,2,6,6-tetramethyl-1-piperidinyloxy, 2,2,5,5-Tetramethyl-1-pyrrolidinyloxy, 2,5-Diphenyl-2,5-dimethyl-1-pyrrolidinyloxy, 3-Carboxy-2,2,5,5-tetramethyl-1-pyrrolidinyloxy und Di-tert.-butylnitroxid, sowie Verbindungen IX wie beispielsweise in US-A 5 412 047 beschrieben, in Betracht. Es können auch Gemische verschiedener solcher Verbindungen eingesetzt werden. Vorteilhaft kann die Verbindung XXV die gleiche chemische Zusammensetzung wie Verbindung IX aufweisen.

Man kann die Polymerisate I nach allen bekannten Polymerisationsmethoden herstellen, also z.B. durch Substanzpolymerisation, Dispersionspolymerisation sowie vorzugsweise durch Lösungspolymerisation.

Als Lösungsmittel eignen sich Alkohole, wie Isopropanol, Glycole, wie Ethandiol, Polyethylenglycol, Polypropylenglycol, Glycerin und Dipropylenglycol, Ether wie Tetrahydrofuran (THF), Dioxan und Glycolether, N-Alkyl-pyrrolidinone, N-Alkyl-pyrrolidone, Amide, wie Dimethylformamid, Organosulfide, Sulfoxide, Ketone, wie Aceton und Methylethylketon, aliphatische und aromatische Kohlenwasserstoffe wie Hexan und Toluol, Wasser sowie Gemische solcher Lösungsmittel.

Die Polymerisation wird in der Regel bei erhöhter Temperatur, vorteilhaft bei 100 bis 180°C, vorzugswiese 110 bis 175°C, insbesondere 130 bis 160°C durchgeführt.

Dazu werden zweckmäßig die Polymerisate II vorgelegt. Die Verbindung X kann dabei in einer Charge, in mehreren Chargen oder kontinuierlich in die Reaktionsmischung eingebracht werden, wobei im Falle von mehreren Chargen die Chargen die gleiche oder unterschiedliche Zusammensetzungen aufweisen können und im Falle der kontinuierlichen Zugabe während der Zugabe die Zusammensetzung der Verbindung X gleich bleiben oder sich ändern kann.

Zum Starten der Reaktion kann man zweckmäßigerweise einen radikalischen Initiator zugeben. Als Initiator kommen 2,4-Dimethyl-2,5-dibenzyl-peroxyhexan, tert.-Butyl-peroxybenzoat, Di-tert.-butyl-diperoxyphthalat, Methylethylketonperoxid, Dicumylperoxid, tert.-Butyl-peroxycrotonat, 2,2-Bis-tert.-butyl(peroxybutan), tert.-Butylperoxy-isopropylcarbonat, 2,5-Dimethyl-2,5-bis(benzoylperoxy)hexan, ter.-Butylperacetat, 2,4-Pentadionperoxid, Di-tert.-butylperoxid, 2,5-Dimethyl-2,5-di-(tert.-butylperoxy)hexan, vorzugsweise tert.-Butylperoxy-2-ethylhexanoat, tert.-Butylperoxypivalat, tert.-Amyl-peroxy-2-ethylhexanoat, insbesondere Azobisalkylnitrile wie Azobisisobutyronitril und Diaroylperoxide wie Dibenzoylperoxid sowie Mischungen solcher Verbindungen in Betracht.

Besonders geeignet sind Initiatoren mit einer Halbwertszeit von 1 Stunde bei 60 bis 90°C und einer Halbwertszeit von 10 Stunden bei 50 bis 80°C. Bei Verwendung von Initiatoren mit längerer Halbwertszeit können vorteilhaft Promotoren wie tertiäre Amine eingesetzt werden.

Das molare Verhältnis zwischen der Verbindung XXV und dem Initiator sollte 0,5 bis 5, vorzugsweise 0,8 bis 4 betragen.

Die Polymerisate I können aus dem Reaktionsgemisch nach bekannten Methoden, z.B. durch Fällen oder Extraktion, isoliert oder ohne Isolierung zur Weiterverarbeitung eingesetzt werden.

Die Polymerisate I weisen vorteilhaft ein Molekulargewicht (Gewichtsmittel) von über 2000, vorzugsweise 3000 bis 50000, und einen Quotienten aus Molekulargewicht (Gewichtsmittel) zu Molekulargewicht (Zahlenmittel) von kleiner 3, vorzugsweise kleiner 2 auf.

Entsprechend ihrer stufenweisen Herstellung bestehen die erfindungsgemäßen Polymerisate I aus einem organophilen polymeren Kettenteil (Polymerisat II) und einem hydrophilen Kettenteil, der saure oder polare Gruppen trägt. Diese sauren oder polaren Gruppen haben zu zahlreichen Pigmenten, insbesondere oxidischen anorganischen Pigmenten eine starke Affinität und lagern sich daher an deren Oberfläche an. Als Folge hiervon enthält man aus den Pigmenten und den Polymerisaten I durch übliches intensives Vermischen Pigmentzubereitungen mit einer organophilen Hülle.

Zur Herstellung der Pigmentzubereitungen werden die Pigmente, insbesondere Farbpigmente mit den Polymerisaten I und gegebenenfalls Zusatzstoffen lösungsmittelfrei oder vorzugsweise in Gegenwart eines organischen Verdünnungsmittels in an sich bekannter Weise vermischt. Als Verdünnungsmittel eignen sich Kohlenwasserstoffe, insbesondere Toluol und Cyclohexan, Ketone, insbesondere Methylethylketon und Cyclohexanon, Ester, insbesondere Essigsäureethylester, sowie Ether, insbesondere Tetrahydrofuran oder Dioxan. In manchen Fällen kommt auch Wasser in Betracht. Die Pigmentzubereitung kann aus dem Gemisch durch Entfernen des Verdünnungsmittels isoliert oder vorzugsweise ohne Isolierung zur Weiterverarbeitung eingesetzt werden.

Die Pigmentzubereitungen lassen sich bequem und ohne unerwünschte Agglomerationen in organischen Bindemitteln einarbeiten.

Dazu können die Pigmentzubereitungen in an sich bekannter Weise mit einem Bindemittel und gegebenenfalls Zusatzstoffen lösungsmittelfrei oder vorzugsweise in Gegenwart eines organischen Verdünnungsmittels gemischt werden. Als organisches Verdünnungsmittel eignen sich Kohlenwasserstoffe, insbesondere Toluol, Cyclohexan und n-Alkane, Ketone, insbesondere Methylethylketon, Cyclohexanon und Methylisobutylketon, Ester, insbesondere Essigsäureethylester, sowie Ether, insbesondere Tetrahydrofuran und Dioxan.

Als Bindemittel kommen bekanntermaßen Polyurethane, Polyacrylate, Polymethacrylate, Polyacrylamid, Vinylpolymere wie Polystyrol, Polyvinylchlorid, Polyvinylacetat, Polyvinylpropionat und Polyacrylnitril, cellulosehaltige Bindemittel wie Celluloseester, insbesondere Cellulosenitrate, Celluloseacetate, Celluloseacetopropionat und Celluloseacetobutyrat, Phenoxyharze und Epoxyharze in Betracht.

Als Zusatzstoffe finden bekanntermaßen Füllstoffe wie anorganische und organische Pigmente, z.B. Aluminiumoxid, Siliziumdioxid, Titandioxid, Ruß, Polyethylen, Polypropylen, Kreidungsinhibitoren, z.B. Antimonoxid, thixotrope Substanzen, z.B. amorphe Kieselsäure, Anwendung.

Die Mischungen aus Pigmentzubereitung, Bindemittel und gegebenenfalls Zusatzstoffen oder Lösungsmitteln dienen in üblicher Weise als Beschichtungsmittel.

Die Beschichtungsmittel können dabei die erfindungsgemäßen Pigmentzubereitungen allein oder im Gemisch mit anderen Pigmenten oder Pigmentzubereitungen enthalten.

## Patentansprüche

1. Als Dispergierharze geeignete Polymerisate I, erhältlich durch Umsetzung von
A. einem Polymerisat II, erhältlich durch Umsetzung von mindestens einer Verbindung III aus der Gruppe bestehend aus
a) einem Ester IV aus
a1) einer α,β-ungesättigten Carbonsäure V und
a2) einem Alkylalkohol VI mit 1 bis 25 Kohlenstoffatomen,
b) einem Ester VII aus
b1) Vinylalkohol und
b2) einer gesättigten Carbonsäure VIII mit 1 bis 4 Kohlenstoffatomen,
c) Vinylchlorid,
d) Styrol oder Vinylbenzole, die am Benzolring eine Alkylgruppe mit 1 bis 4 Kohlenstoffatomen tragen, in Gegenwart einer Verbindung IX, die eine N-Oxyl-Radikal-Funktion enthält, mit
B. mindestens einer Verbindung X aus
a) 50 bis 100 Gew.-% bezogen auf X mindestens einer Verbindung XI aus der Gruppe bestehend aus
a1) einem Ester XII aus
a) einer α,β-ungesättigten Carbonsäure XIII und
b) einem Alkylalkohol XIV mit 2 bis 10 Kohlenstoffatomen, der mindestens eine polare oder saure Gruppe trägt,
a2) einem Amid XV aus
a) einer α,β-ungesättigten Carbonsäure XVI und
b) Ammoniak oder einem Amin XVII mit 2 bis 10 Kohlenstoffatomen, das mindestens eine polare, oder saure Gruppe oder eine Gruppe, die leicht in eine saure Gruppe übergehen kann, trägt,
a3) N-Vinyl-Verbindungen XVIII,
a4) Styrolsulfonsäure oder einer Vinylbenzolsulfonsäure, die eine Alkylgruppe mit 1 bis 4 Kohlenstoffatomen am Ring trägt, und
b) 0 bis 50 Gew.-% bezogen auf X mindestens einer Verbindung XIX aus der Gruppe bestehend aus
b1) einem Ester XX aus
a) einer α,β-ungesättigten Carbonsäure XXI und
b) einem Alkylalkohol XXII mit 1 bis 25 Kohlenstoffatomen,
b2) einem Ester XXIII aus
a) Vinylalkohol und
b) einer gesättigten Carbonsäure XXIV mit 1 bis 4 Kohlenstoffatomen,
b3) Vinylchlorid,
b4) Styrol oder Vinylbenzole, die am Benzolring eine Alkylgruppe mit 1 bis 4 Kohlenstoffatomen tragen, in Gegenwart einer Verbindung XXV, die eine N-Oxyl-Radikal-Funktion enthält,
wobei der Gewichtsanteil von II an dem Polymerisat I 10 bis 90 Gew.-% und der Gewichtsanteil der Gesamtmenge von X 10 bis 90 Gew.-% an dem Polymerisat I beträgt.

2. Polymerisat I nach Anspruch 1, erhältlich aus Acrylsäure oder Methacrylsäure als Carbonsäure V.

3. Polymerisat I nach Anspruch 1 oder 2, erhältlich aus Methanol, Ethanol, n-Propanol, i-Propanol, n-Butanol, sek.-Butanol, tert.-Butanol oder i-Butan-1-ol als Alkylalkohol VI.

4. Polymerisat I nach den Ansprüchen 1 bis 3, erhältlich aus Vinylacetat oder Vinylpropionat als Ester VII.

5. Polymerisat I nach den Ansprüchen 1 bis 4, erhältlich aus Acrylsäure oder Methacrylsäure als Carbonsäure XIII.

6. Polymerisat I nach den Ansprüchen 1 bis 5, erhältlich aus 3-Sulfopropanol oder 2-Sulfoethanol als Alkylalkohol XIV.

7. Polymerisat I nach den Ansprüchen 1 bis 6, erhältlich aus Acrylsäure oder Methacrylsäure als Carbonsäure XVI.

8. Polymerisat I nach den Ansprüchen 1 bis 7, erhältlich aus 2-Amino-2-methyl-propansulfonsäure, 2-Aminoethansulfonsäure, 3-Aminopropansulfonsäure sowie deren Salze als Amin XVII.

9. Verwendung der Polymerisate I gemäß den Ansprüchen 1 bis 8 für Pigmentzubereitungen und pigmenthaltige Beschichtungen.

10. Pigmentzubereitungen aus einem Pigment und einem Polymerisat I gemäß den Ansprüchen 1 bis 8.

## Claims

1. A polymer I which is suitable as a dispersing resin and is obtainable by reacting
A. a polymer II obtainable by reacting at least one compound III selected from the group consisting of
a) an ester IV of
a1) an α,β-unsaturated carboxylic acid V and
a2) an alkyl alcohol VI of 1 to 25 carbon atoms,
b) an ester VII of
b1) vinyl alcohol and
b2) a saturated carboxylic acid VIII of 1 to 4 carbon atoms,
c) vinyl chloride
d) styrene or vinyl benzenes which carry an alkyl group of 1 to 4 carbon atoms on the benzene ring, in the presence of a compound IX which contains an N-oxyl radical function, with
B. at least one compound X comprising
a) 50 to 100% by weight, based on X, of at least one compound XI selected from the group consisting of
a1) an ester XII of
a) an α,β-unsaturated carboxylic acid XIII and
b) an alkyl alcohol XIV of 2 to 10 carbon atoms which carries at least one polar or acidic group,
a2) an amide XV of
a) an α,β-unsaturated carboxylic acid XVI and
b) ammonia or an amine XVII of 2 to 10 carbon atoms which carries at least one polar or acidic group or one group which can readily be converted into an acidic group,
a3) N-vinyl compounds XVIII,
a4) styrene sulfonic acid or vinylbenzenesulfonic acid which carries an alkyl group of 1 to 4 carbon atoms on the ring, and
b) from 0 to 50% by weight based on X, of at least one compound XIX selected from the group consisting of
b1) an ester XX of
a) an α,β-unsaturated carboxylic acid XXI and
b) an alkyl alcohol XXII of 1 to 25 carbon atoms,
b2) an ester XXIII of
a) vinyl alcohol and
b) a saturated carboxylic acid XXIV of 1 to 4 carbon atoms,
b3) vinyl chloride,
b4) styrene or vinylbenzenes, which carry an alkyl group of 1 to 4 carbon atoms on the benzene ring, in the presence of a compound XXV which contains an N-oxyl radical function,
polymer I containing from 10 to 90% by weight of II and in total from 10 to 90% by weight of X.

2. A polymer I as claimed in claim 1, obtainable from acrylic acid or methacrylic acid as carboxylic acid V.

3. A polymer I as claimed in claim 1 or 2, obtainable from methanol, ethanol, n-propanol, isopropanol, n-butanol, sec-butanol, tert-butanol or isobutan-1-ol as alkyl alcohol VI.

4. A polymer I as claimed in any of claims 1 to 3, obtainable from vinyl acetate or vinyl propionate as ester VII.

5. A polymer I as claimed in any of claims 1 to 4, obtainable from acrylic acid or methacrylic acid as carboxylic acid XIII.

6. A polymer I as claimed in any of claims 1 to 5, obtainable from 3-sulfopropanol or 2-sulfoethanol as alkyl alcohol XIV.

7. A polymer I as claimed in any of claims 1 to 6, obtainable from acrylic acid or methacrylic acid as carboxylic acid XVI.

8. A polymer I as claimed in any of claims 1 to 7, obtainable from 2-amino-2-methyl-propane sulfonic acid, 2-aminoethane sulfonic acid or 3-aminopropane sulfonic acid as amine XVII or from a salt thereof.

9. Use of a polymer I as claimed in any of claims 1 to 8 for pigment formulations and pigment-containing coatings.

10. A pigment formulation comprising a pigment and a polymer I as claimed in any of claims 1 to 8.

## Revendications

1. Produits de polymérisation I, qui sont appropriés comme résines de dispersion et qui peuvent être obtenus par réaction
A. d'un produit de polymérisation II, obtenu par réaction d'au moins un composé III du groupe constitué
a) d'un ester IV à base
a1) d'un acide carboxylique α,β-insaturé V et
a2) d'un alcool alkylique VI comportant 1 à 25 atomes de carbone,
b) d'un ester VII à base
b1) d'alcool vinylique et
b2) d'un acide carboxylique saturé VIII comportant 1 à 4 atomes de carbone,
c) de chlorure de vinyle,
d) de styrène ou de vinylbenzène, qui portent sur le noyau de benzène un groupe alkyle comportant 1 à 4 atomes de carbone, en présence d'un composé IX, qui contient une fonction de radical N-oxyle, avec
B. au moins un composé X à base
a) de 50 à 100% en poids, par rapport à X, d'au moins un composé XI du groupe constitué
a1) d'un ester XII à base
a) d'un acide carboxylique α,β-insaturé XIII et
b) d'un alcool alkylique XIV comportant 2 à 10 atomes de carbone, qui porte au moins un groupe polaire ou acide,
a2) d'un amide XV à base
a) d'un acide carboxylique α,β-insaturé XVI et
b) d'ammoniac ou d'une amine XVII comportant de 2 à 10 atomes de carbone, qui porte au moins un groupe polaire ou acide ou un groupe qui peut aisément se convertir en un groupe acide,
a3) de composés N-vinyliques XVIII,
a4) d'acide styrènesulfonique ou d'un acide vinylbenzène-sulfonique, qui porte sur le noyau un groupe alkyle comportant 1 à 4 atomes de carbone, et
b) de 0 à 50% en poids, par rapport à X, d'au moins un composé XIX du groupe constitué
b1) d'un ester XX à base
a) d'un acide carboxylique α,β-insaturé XXI et
b) d'un alcool alkylique XXII comportant 1 à 25 atomes de carbone,
b2) d'un ester XXIII à base
a) d'alcool vinylique et
b) d'un acide carboxylique saturé XXIV comportant 1 à 4 atomes de carbone,
b3) de chlorure de vinyle,
b4) de styrène ou de vinylbenzènes, qui portent sur le noyau de benzène un groupe alkyle comportant 1 à 4 atomes de carbone, en présence d'un composé XXV, qui contient une fonction de radical N-oxyle,
la fraction pondérale de Il du produit de polymérisation I étant de 10 à 90% en poids et la fraction pondérale de la quantité totale de X étant de 10 à 90% en poids du produit de polymérisation I.

2. Produit de polymérisation I suivant la revendication 1, qui peut être obtenu à partir d'acide acrylique ou d'acide méthacrylique comme acide carboxylique V.

3. Produit de polymérisation I suivant l'une des revendications 1 et 2, qui peut être obtenu à partir de méthanol, d'éthanol, de n-propanol, de i-propanol, de n-butanol, de sec-butanol, de tert-butanol ou de i-butane-1-ol, comme alcool alkylique VI.

4. Produit de polymérisation I suivant l'une des revendications 1 à 3, que l'on peut obtenir à partir d'acétate de vinyle ou de propionate de vinyle comme ester VII.

5. Produit de polymérisation I suivant l'une des revendications 1 à 4, que l'on peut obtenir à partir d'acide acrylique ou d'acide méthacrylique comme acide carboxylique XIII.

6. Produit de polymérisation I suivant l'une des revendications 1 à 5, que l'on peut obtenir à partir de 3-sulfopropanol ou de 2-sulfoéthanol comme alcool alkylique XIV.

7. Produit de polymérisation I suivant l'une des revendications 1 à 6, que l'on peut obtenir à partir d'acide acrylique ou d'acide méthacrylique comme acide carboxylique XVI.

8. Produit de polymérisation I suivant l'une des revendications 1 à 7, que l'on peut obtenir à partir d'acide 2-amino-2-méthylpropanesulfonique, d'acide 2-aminoéthanesulfonique, d'acide 3-aminopropanesulfonique ainsi que de leurs sels, comme amine XVII.

9. Utilisation des produits de polymérisation I suivant l'une des revendications 1 à 8, pour des compositions à base de pigment et des enductions contenant du pigment.

10. Composition de pigment à base d'un pigment et d'un produit de polymérisation I suivant l'une des revendications 1 à 8.
